# EUROPEAN PATENT SPECIFICATION

(11) **EP 3 507 944 B1**
(45) Date of publication and mention of the grant of the patent: **16.02.2022**
(21) Application number: 17765367.2
(22) Date of filing: 30.08.2017
(51) Int. Cl.: H04L 12/40

(54) **IMPROVED VOTING FOR PROFIBUS LINE REDUNDANCY**
VERBESSERTES WÄHLEN FÜR PROFIBUS-LEITUNGSREDUNDANZ
VOTE AMÉLIORÉ POUR REDONDANCE DE LIGNE PROFIBUS

(30) Priority: 02.09.2016 DE 102016116482
(43) Date of publication of application: 10.07.2019
(73) Proprietor: ABB Schweiz AG, 5400 Baden (CH)
(72) Inventor: BINDSZUS, Michael, 32423 Minden (DE)
(74) Representative: Maiwald Patent- und Rechtsanwaltsgesellschaft mbH
(86) International application number: PCT/EP2017/071734
(87) International publication number: WO 2018/041878

(56) References cited:
- EP-A1- 2 547 045
- WO-A1-2015/124538
- US-A- 5 422 877
- US-A1- 2005 041 653
- US-A1- 2013 262 723
- US-B1- 6 973 029

## Description

### Field of the Invention

The invention relates to field bus communication networks where a communication link is realized with two redundant physical connections.

### Background

Today a lot of troubleshooting needs to be done in PROFIBUS installations. Most disturbances (approximately 80%) are caused by a physically bad bus.

Issues are often detected after commission of the control system. Electrical contact problems can occur caused by vibration, temperature or other environmental influences. Other disturbances have been seen after maintenance work due to missed bus termination or cabling problems or after replacement and maintenance of devices.

We experienced very often that even if out of two or more redundant lines, only one line was disturbed, the whole communication was affected. One reason for this is that when optical repeaters are present on the bus, they amplify bad signals and reflections that otherwise would be of too low a level to be detected in the electrical domain to a level where they are detected as valid in the electrical domain. The result will be defect telegrams.

Defect telegrams on disturbed lines are received from the Master and the Slaves, causing massive communication problems and higher bus- and CPU loads. In worst cases, this can cause a plant trip.

It is the object of the present invention to improve the robustness of the voted RS485 line redundancy.

### Prior Art

Prior art US 6 973 029 B1 discloses a serial bus system which have no system-intergrated redundancy means to be connected to one another by means of bus lines of redundant design.

US 2013/262723 A1 discloses a bus subscriber device for connection to a line-redundant, serial data bus, over which data are exchanged according to a predefined protocol.

US 5 422 877 A describes a switch for selecting a message from one of two buses wherein the effects of a faulty communications bus is minimized.

WO 2015/124538 A1 discloses a method for safely transmitting data between electronic devices, wherein the reliability of data transmission is improved with the method.

Prior art US 2005/041653 A1 describes a system and an associated method for receiving data telegrams in communication systems having redundant network paths.

EP 2 547 045 A1 discloses a field communication system which executes communication between field devices as slave devices and communication modules as master devices. In the described field communication system the reliability of master-slave communication is improved.

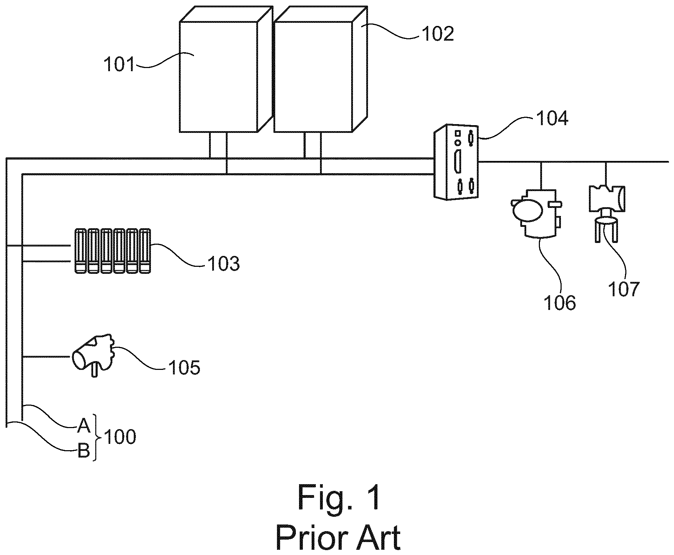

PROFIBUS Line **100** (connection A and B) has connections from PROFIBUS Master **101** and the Redundant PROFIBUS-Master **102**, as shown in Figure 1. Every Master **101**, **102** has a redundant connection to the PROFIBUS **100**. The active Master **101** is sending on connections **A** and **B**. The Master **101**, **102** can receive PROFIBUS telegrams from both connections **A** and **B**. If both telegrams on **A** and **B** are received at exactly the same time, in each bus device (**101-104**) having a redundant connection to the PROFIBUS **100**, the voter inside decides which telegram will be forwarded to the respective processing stack, e.g., a PROFIBUS -Master Stack, in the controller.

Single non-redundant Slaves (**105**) and redundant Slaves (**104**) can be connected to the PROFIBUS Line (**100**).

With the redundancy link module ABB RLM01 (**104**), which is detailed further in EP 0 990 330 B1, Single Slaves (**106**, **107**) can be connected to both PROFIBUS (**100**) connections A and B. This has the advantage that if connection A or connection B is disturbed, the Slave **106**, **107** can still communicate over the healthy PROFIBUS (**100**) connection. Hereto Figure 1.

The current voting solution simply alternates between connection **A** and connection **B** if telegrams are received at the same time.

At the same time means if both receivers of connection **A** and **B** are getting the first valid bit.

Current validation is to check a valid Start bit, Stop bit and the correct Parity of the first byte.

In addition the length of the telegram > 350 Byte is checked to prevent communication with permanently sending slaves.

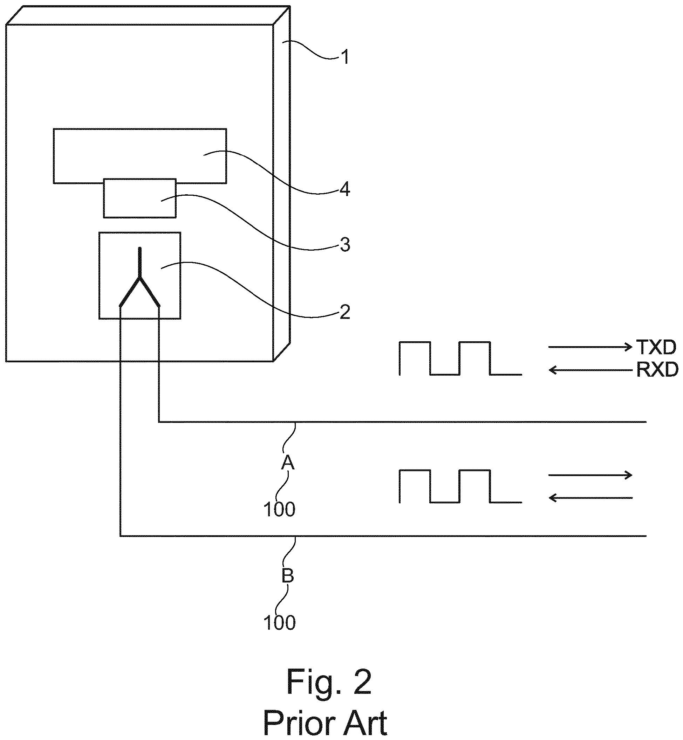

Referring to Figure 2, all telegrams with valid first byte are forwarded by the voter **2** to the processing stack **3**, e.g., PROFIBUS Master Stack, e.g. ASPC2Chip, so that they can be passed on to the application 4 running on the bus device **1**. Telegrams with a defect after the first byte are also given for processing to the Master **3**. The Master **3** has to react to the defect telegrams with retry and/or diagnostic requests. This increases the workload. In a worst case, this makes the Master **3** unresponsive and causes a redundancy switch over from the active Master **101** shown in Figure 1 to the redundant Master **102**, but the redundant Master **102** is facing the same defect telegrams, so there may be a switching back and forth between Masters **101** and **102** depending on how long the failure situation persists.

The result is a massive communication disturbance.

The additional checks consume processing resources in the voter, and hence in the bus device. On the face of it, this is a sacrifice, since computing resources are rather scarce on field bus devices. However, we have found that this sacrifice is overcompensated because more defect telegrams are detected before being passed on to the processing stack, causing even more processing resources to be consumed there.

Even with the checks of each and every telegram, there will still be some defect telegrams that pass the checks and may be forwarded to the processing stack. Tightening the checks in the voter up to the point where all defect telegrams are detected would consume more resources than are available on the bus device for this purpose. However, we have found that the line quality of each of the connections **A** and **B** is indicative of the probability that a telegram received from the respective connection will be defect. After all, the goal is to improve the overall performance of the communication, i.e., the handling of a large amount of telegrams, rather than improving the handling of every individual telegram.

### Disclosure of the Invention

The invention is defined by the features specified in claim 1. Preferred embodiments are specified in the dependent claims.

According to the invention, the voter is configured to observe the line quality by counting the number of telegrams marked as defect, and/or the number of telegrams not marked as defect. This measure of the line quality is directly correlated to what is to be learned from the line quality, i.e., said probability that telegrams received from a connection will be defect.

The invention is not limited to exactly two redundant connections. There may be any practical number of further connections. For the sake of clarity, without any limitation being intended, the description that follows is centered on embodiments with two redundant connections **A** and **B**.

Also, it is not mandatory that the voter is comprised within the same bus device that also houses the processing stack. The voter may also be a standalone unit, or it may reside in another component that retransmits received telegrams onto the bus line, such as an optical repeater.

For example, the voter may be configured to assign one of a set of discrete line quality levels to each of connections **A** and **B**, where each quality level is associated with a threshold value for the number of telegrams marked as defect, and/or the number of telegrams not marked as defect. This introduces a hysteresis for the switching between quality levels, which serves to absorb spurious disturbances on either of the connections A or B and keep them from escalating into oscillations between quality levels.

In a specially advantageous embodiment of the invention, the voter is configured to observe the line quality over a fixed time interval extending from the present into the past, and/or on the basis of the most recent N received telegrams, where N is a positive integer. Such historical data from the immediate past are most indicative of whether the next telegram that is to be received from the respective connection will be defect. Most disturbances are not present constantly, but rather intermittently; if they were present constantly, it would be much easier to pinpoint and fix them for good.

For example, the voter may comprise at least one shift register to store decisions whether a telegram has been marked as defect and/or other observations indicative of line quality. As new values are written into the shift register, older values get automatically discarded. The content of the shift register is therefore a sliding window that allows a view of the immediate past.

According to an example not forming part of the present invention, the voter may be configured to receive telegrams according to a PROFIBUS field bus standard. In this case, the protocol field to be evaluated may preferably comprise a start delimiter, and/or an end delimiter. The evaluating whether the protocol field is valid may comprise checking whether the protocol field is consistent with the type of telegram. It is checked whether a start delimiter, an end delimiter, and a checksum are all valid.

Preferably, if both the telegram received from connection A and the telegram received from connection B are not marked as defect and line qualities of connections **A** and **B** are equal, the voter may be configured to alternate between forwarding a telegram received from connection **A** and forwarding a telegram received from connection **B** to the processing stack of the bus device.

In a further specially advantageous embodiment of the invention, the voter comprises, or is at least communicatively coupled with, a measuring module that is configured to measure, on each of the connections **A** and **B**, at least one physical quantity, and further configured to observe the line quality of connections **A** and **B** based at least in part on the measurement results acquired by said measuring module. As discussed above, most disturbances are caused by physical issues with the bus, so by means of a physical measurement, these issues may be detected even before they actually cause telegrams to become defect.

For example, the observation of line quality may be based at least in part on a comparison of the measurement results with a physical specification of the bus line. The correct functioning of the communication is not an "on-off" effect that critically depends on the exact conformity with these specifications. Rather, the discretization of the analog physical quantities into digital bits causes a certain deviation of the physical properties from the specifications to be tolerable before bits begin to get flipped, and then the bit error rate gradually increases. Even before bits get flipped, the deviation from the specification may already be detected.

For example, the measurement module may be configured to measure one or more of: a voltage, an impedance, a pulse shape of pulses that represent transmitted bits, or a timing of pulses that represent transmitted bits. Specifically, measuring a voltage may aid in spotting bad electrical connections or short circuits, while measuring an impedance may aid in spotting missed bus terminations or improper star-shaped connections within the bus. The measuring of the timing may, for example, comprise measuring the bus idle time.

To perform the functions detailed above, the voter may avail itself of computing resources and other hardware already present in the bus device where the voter resides. Therefore, the improved functionality regarding the voting may be wholly or partially implemented in software for a bus device. This software constitutes a product that is marketable separately from a hardware bus device or a hardware voter, and may be added to an existing bus device or voter later as an update. The invention therefore also provides a non-transitory storage medium comprising machine readable instructions that, when executed by a computer, a voter or a bus device, augment the computer, the voter or the bus device with the functionality of the voter according to the invention, and/or cause the computer, the voter or the bus device to perform the steps that the voter according to the invention performs.

In an example not forming part of the present invention, the line quality observation may work as follows:
- Check all first bytes of telegrams whether they have a valid Start bit, Stop bit and Parity bit;
- Check, dependent on the telegram type, whether the telegrams have a valid Start delimiter, Checksum and End delimiter.

Quality Observation: If one of the above sanity checks fails, the telegram will be marked as defect; if everything is ok, the telegram will be marked as good. The result of the check is stored in a shift register for each PROFIBUS line **A** or **B**. With this, the quality of the last telegrams can be remembered.

The line **A** or **B** with less defect telegrams will be taken into account if PROFIBUS Line Voting is required. Both lines are getting the line quality status GOOD at startup.

Dependent on the number of defect Telegrams, the line gets the status LOW. If a lot of defect telegrams is detected on this line, the line gets the status BAD. If the number of defect telegrams has decreased and has fallen under a specific value, the quality goes to from BAD to LOW or even GOOD again. Lines with same Quality are handled as before, same voting mechanism.

### Glossary

- CI: Communication Interface managing the communication e.g. CIFN (Fnet), CIDP (Profibus), CISA (IEC 61850), CICN (Cnet)
- CICN: Communication Interface Cnet
- CIDP: Communication Interface Profibus
- CIFN: Communication Interface Fnet
- CISA: Communication Interface IEC 61850
- Cnet: Controller are connected to each other via the Controller Network (lateral communication)
- Communication Interface: A component managing the communication
- Composer Melody: Melody Engineering Tool
- Controller: The central processing unit within the Melody system
- CPU: Central processing unit
- Ethernet: Ethernet is a family of computer networking technologies for local area networks
- FIFO: FIFO is an acronym in computing and electronic design for First In, First Out, which is an abstraction related to ways of organizing and manipulation of data relative to time and prioritization.
- Fnet: Local I/O Modules are connected to the Controller via the Field Network
- HW: Hardware
- PROFIBUS: Process Field Bus (IEC 61158/IEC 61784)
- SW: Software
- RxD: Receive Data (Empfangsdaten)
- TxD: Transmit Data (Sendedaten)

In the following, the subject-matter of the present invention is illustrated using Figures without any intention to limit the scope of the invention. The Figures show:
- Figure 1:: (Prior art) Example of a PROFIBUS network with a bus line 100 comprising redundant connections A and B, and bus devices 101-107 connected thereto.
- Figure 2:: (Prior art) Illustration of the role of a voter **2** in a bus device **1** connected to redundant connections **A** and **B** of a bus line **100**.
- Figure 3:: Exemplary embodiment of a voter **2** according to the present invention.
- Figure 4:: Further exemplary embodiment of a voter **2** according to the present invention.
- Figure 5:: Exemplary operation of a quality state machine in the line quality assessment module **24a**, **24b**.
- Figure 6:: Further exemplary embodiment of a voter **2** with more than two connections **A**, **B**, **M** to bus line **100**.

Figures 1 and 2 have already been discussed in connection with the prior art.

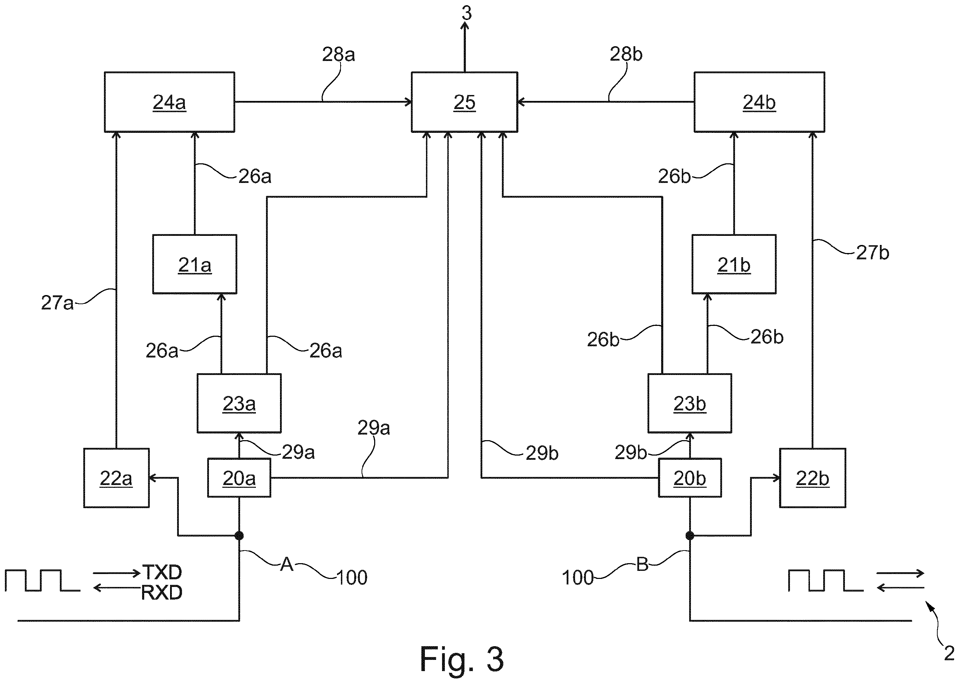

Figure 3 illustrates an exemplary embodiment of a voter **2**. The voter **2** is arranged between two redundant connections **A** and **B** of a bus line **100** and the processing stack **3** of a bus device **1**. Each connection **A** and **B** is physically monitored by a respective measuring module **22a**, **22b** that measures a physical quantity **27a**, **27b**. At the same time, a modem **20a**, **20b** demodulates the telegram **29a**, **29b** from the raw signal on the connection **A**, **B**. Each telegram **29a**, **29b** is forwarded to a checking module **23a**, **23b** that outputs a respective decision **26a**, **26b** whether the telegram **29a**, **29b** is defect or not. The decisions **26a** and **26b**, as well as the telegrams **29a** and **29b**, are forwarded to the final deciding module **25**.

The decisions **26a**, **26b** are also forwarded to respective shift registers **21a** and **21b** that store a fixed number of decisions **26a**, **26b** from the immediate past. When a new decision **26a**, **26b** is added, the oldest decision **26a**, **26b** present in the shift register is discarded. The stored decisions **26a**, **26b** and the physical measurement results **27a**, **26b** are forwarded to respective line quality assessment modules **24a** and **24b** for the connections **A** and **B**. Each line quality assessment module **24a**, **24b** forwards its respective assessment **28a**, **28b** of the line quality for connection **A** or **B** to the final deciding module **25**.

The final deciding module **25** decides which of the telegrams **29a**, **29b** received simultaneously on connections **A** and **B** will be forwarded to the processing stack **3** of the bus device **1**. If one of the telegrams **29a**, **29b** is marked as defect and the other is not, the telegram **29a**, **29b** that is not marked as defect will be forwarded. If neither of the telegrams **29a**, **29b** has been marked as defect, the telegram **29a**, **29b** from the connection **A**, **B** with the better line quality **28a**, **28b** will be forwarded. If line qualities **28a** and **28b** are equal, the final deciding module **25** will alternate between forwarding a telegram **29a** from connection **A** and forwarding a telegram **29b** from connection **B**.

It should be noted that the dividing of the functionality into modules shown in Figure 3 is purely illustrative and not mandatory. Also, the term "module" does not imply that the respective functionality needs to be implemented in hardware. Rather, the functionality may also be implemented in software that utilizes existing hardware residing in the voter **2** or somewhere else in the bus device **1**.

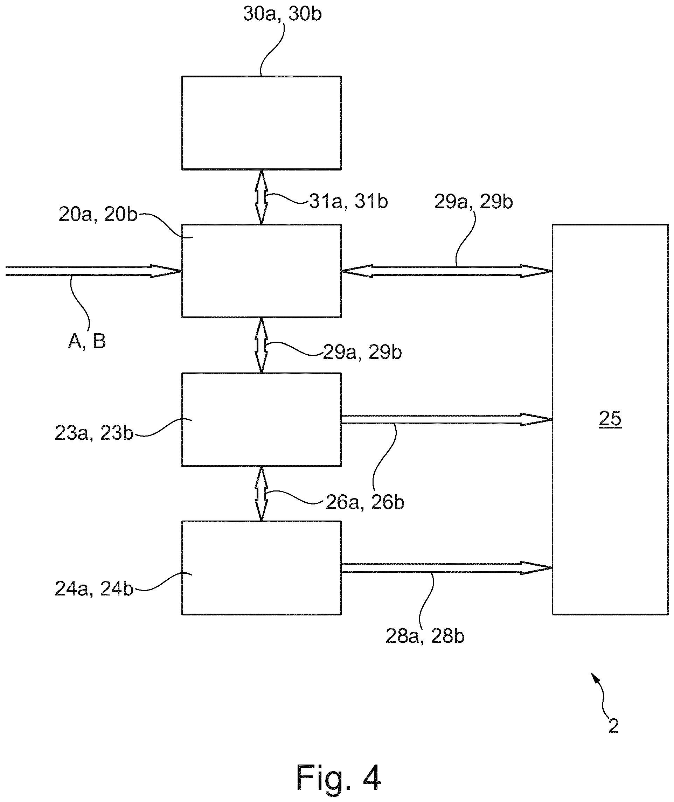

Figure 4 illustrates a further exemplary embodiment of the voter **2** according to the present invention. In this embodiment, the modem **20a**, **20b** comprises a 15-bit shift register for data incoming from the connection **A**, **B**. The modem **20a**, **20b** is driven by a timing and control module **30a**, **30b** that supplies a baud rate and shift clock in a timing signal **31a**, **31b**. The line quality **28a**, **28b** is assessed in three levels, good, low and bad. The line quality assessment module **24a**, **24b** comprises a quality memory and a quality state machine which, depending on the most recent decisions **26a**, **26b** made by the checking module **23a**, **23b**, controls the movement of the line quality **28a**, **28b** between said three levels.

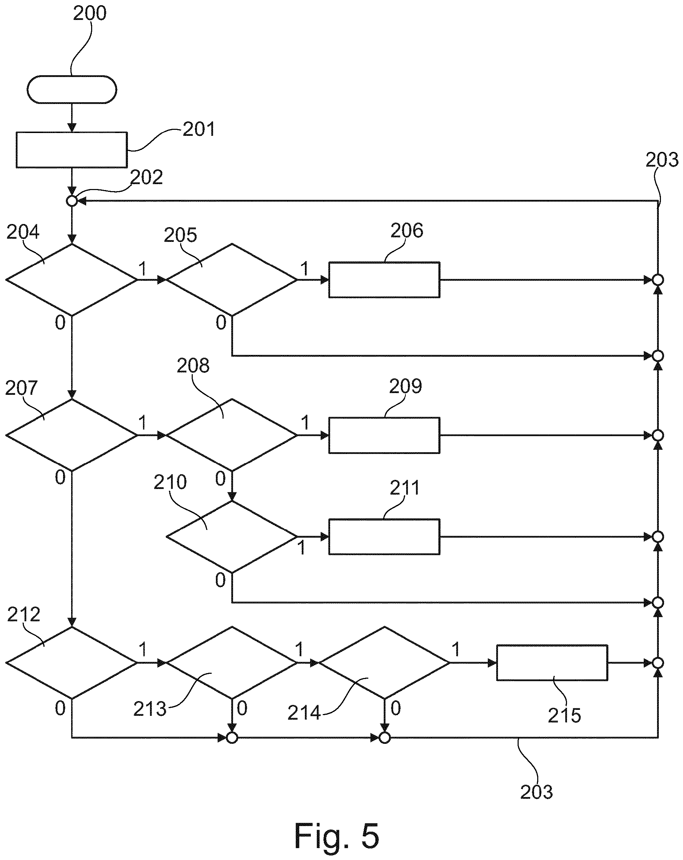

Figure 5 illustrates a possible operation of a quality state machine in the line quality assessment module **24a**, **24b**. Operation starts at block **200**. In block **201**, the connection **A**, **B** to which the line quality assessment module **24a**, **24b** relates is enabled, and its line quality **28a**, **28b** is initialized to the "low" level.

In diamond **204**, it is checked whether the line quality **28a**, **28b** is at the "good" level. If this is the case (logical value 1), it is checked in diamond **205** whether the number of telegrams **29a**, **29b** marked as defect reaches or exceeds the upper threshold for the transition to the "low" level. If this is the case (logical value 1), in block **206**, the line quality **28a**, **28b** is set to "low". Otherwise (logical value 0), the line quality **28a**, **28b** is left unchanged.

If the line quality **28a**, **28b** is not at the "good" level (logical value 0 in diamond **204**), in diamond **207**, it is checked whether the line quality **28a**, **28b** is at the "low" level. If this is the case (logical value 1), in diamond **208**, it is checked whether the number of telegrams **29a**, **29b** marked as defect reaches or falls below the lower threshold for the transition to the "good" level. If this is the case (logical value 1), in block **209**, the line quality **28a**, **28b** is set to "good". Otherwise (logical value 0), in diamond **210**, it is checked whether the number of telegrams **29a**, **29b** marked as defect reaches or exceeds the upper threshold for the transition to the "bad" level. If this is the case (logical value 1), in block **211**, the line quality **28a**, **28b** is set to "bad", and the respective connection **A**, **B** is disabled, meaning that further telegrams **29a**, **29b** from this connection **A**, **B** will not be forwarded to the processing stack **3** anymore. Otherwise (logical value 0), the line quality **28a**, **28b** is left unchanged.

If the line quality **28a**, **28b** is neither at the "good" level nor at the "low" level (logical value 0 in diamond **207**), in diamond **212**, it is checked whether the line quality **28a**, **28b** is at the "bad" level. If this is the case (logical value 1), in diamond **213**, it is checked whether the number of telegrams **29a**, **29b** marked as defect reaches or falls below the lower threshold for transition to the "low" level. If this is the case, in diamond **214**, it is further checked whether the number of received telegrams **29a**, **29b** that are not marked as defect reaches or exceeds a further threshold. If this is the case (logical value 1), in block **215**, the respective connection **A**, **B** is re-enabled, and the line quality **28a**, **28b** is set to "low". If either too many telegrams **29a**, **29b** marked as defect continue to be received (logical value 0 in diamond **213**), or too few valid telegrams **29a**, **29b** have been received since the disabling of the connection in block **211** (logical value 0 in diamond **214**), then the connection **A**, **B** remains disabled, and the line quality **28a**, **28b** remains "bad".

In any case, including a case where the line quality **28a**, **28b** has some undefined value for whatever reason (logical value 0 in diamond **212**), execution branches back to point **202** via return path **203**.

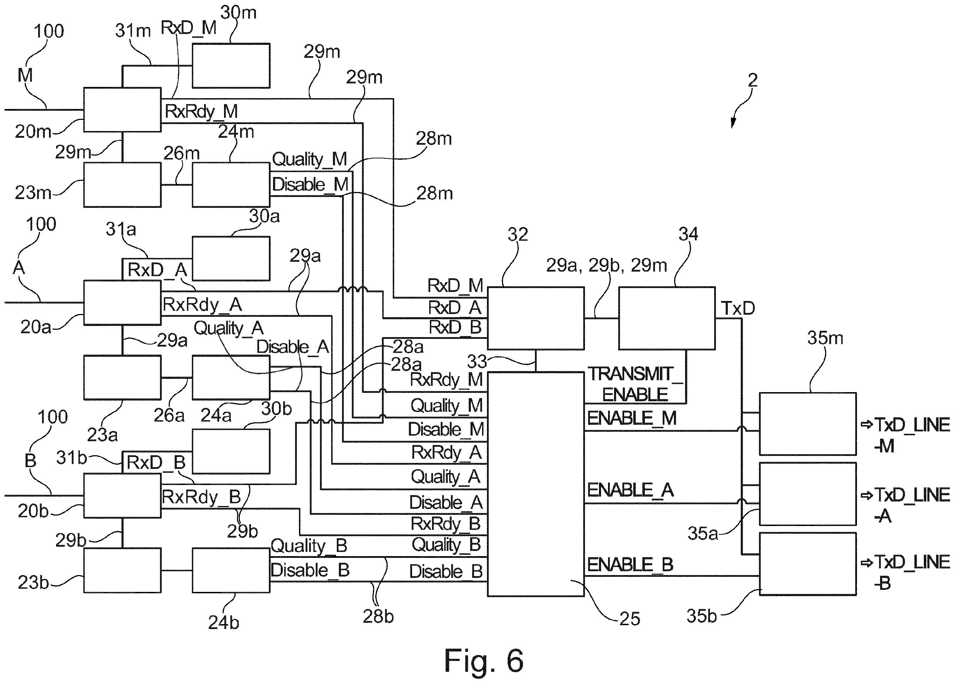

Figure 6 illustrates a further exemplary embodiment of the voter **2**. Here, apart from redundant connections **A** and **B**, further redundant connections are present, of which only one is exemplary drawn and labeled as **M**. For each redundant connection, the voter **2** contains its own separate branch that basically works as illustrated in Figure 4.

However, unlike in Figure 4, there is a further received data multiplexing module **32** that is controlled by the final deciding module **25** via a selecting line **33**. When the telegrams **29a**, **29b**, **29m** are forwarded from the individual branches to the final deciding module, only a corresponding receive ready signal RxRdy_A, RxRdy_B, RxRdy_M is actually fed into the final deciding module **25**, while the actual received data RxD_A, RxD_B, RxD_M is rerouted to the received data multiplexing module **32**.

As a further difference compared with Figure 4, when the line quality **28a**, **28b**, **28m** is forwarded from the line quality assessment modules **24a**, **24b**, **24m** to the final deciding module **25**, it is split into the actual quality value Quality_A, Quality_B, Quality_M on the one hand and a Disable_A, Disable_B, Disable_M flag on the other hand. As it is illustrated in Figure 5, the Disable_A, Disable_B, Disable_M flag is set if the line quality **28a**, **28b**, **28m** of the respective connection **A**, **B**, **M** is in the "bad" state.

Based on the quality values Quality_A, Quality_B, Quality_M, the final deciding module **25** selects, using the selecting line **33**, which of the simultaneously received telegrams **29a**, **29b**, **29m** is to be forwarded to the transmitter **34**. Upon being given a TRANSMIT_ENABLE signal from the final deciding module **25**, the transmitter **34** forwards the chosen telegram **29a**, **29b**, **29m** to the transmit buffers **35a**, **35b**, **35m**. From these transmit buffers **35a**, **35b**, **35m**, the chosen telegram **29a**, **29b**, **29m** is retransmitted if the corresponding ENABLE_A, ENABLE_B, ENABLE_M signal is given by the final deciding module **25**. The final deciding module **25** will do so if the corresponding Disable_A, Disable_B, Disable_M flag is not set.

In this embodiment, the final forwarding of the chosen telegram **29a**, **29b**, **29m** to the processing stack **3** is performed via the bus line **100** again, i.e., this processing stack **3** does not have to be comprised within the same bus device that houses the voter **2**. For example, the embodiment shown in Figure 6 may be used in an optical repeater as a filter that "cleans out" telegrams marked as defect. In this manner, the side effect of optical repeaters that was mentioned in the "Background" section, namely the amplifying and retransmitting of corrupt telegrams that would otherwise have been undetectable in the electrical domain, may be cured.

Likewise, the embodiment shown in Figure 6 may also be used in a redundancy link module **104** where the outputs of all the transmit buffers **35a**, **35b** and **35m** are aggregated onto one single output line, to serve Single Slaves **106** and **107**.

### List of reference signs

- 1: bus device
- 2: voter
- 3: processing stack in bus device 1
- 4: application in bus device 1
- 20a, 20b, 20m: modem in voter 2
- 21a, 21b, 21m: quality-related shift register in voter 2
- 22a, 22b: physical measurement module in voter 2
- 23a, 23b, 23m: telegram checking module in voter 2
- 24a, 24b, 24m: link quality assessment module in voter 2
- 25: final deciding module in voter 2
- 26a, 26b, 26m: decisions made by telegram checking modules 23a, 23b, 23m
- 27a, 27b: measurement results obtained by module 22a, 22b
- 28a, 28b, 28m: link quality determined by assessment module 24a, 24b, 24m
- 29a, 29b, 29m: telegrams received from connections A, B, M
- 30a, 30b, 30m: timing and control modules for modems 20a, 20b, 20m
- 31a, 31b, 31m: timing signals from modules 30a, 30b, 30m
- 32: received data multiplexing module
- 33: select line from module 25 to module 32
- 34: transmitter
- 35a, 35b, 35m: transmit buffers
- 100: bus line
- 101: active Master on bus line 100
- 102: redundant passive Master on bus line 100
- 103: redundant Slave on bus line 100
- 104: redundancy link module on bus line 100
- 105: non-redundant Slave on bus line 100
- 106-107: Single Slaves connected to bus 100 via module 104
- 200: start of quality state machine
- 201: initializing quality 28a, 28b
- 202: return point
- 203: return path
- 204: checking whether quality 28a, 28b is "good"
- 205: checking whether to transition from "good" to "low"
- 206: transitioning from "good" to "low"
- 207: checking whether quality 28a, 28b is "low"
- 208: checking whether to transition from "low" to "good"
- 209: transitioning from "low" to "good"
- 210: checking whether to transition from "low" to "bad"
- 211: transitioning from "low" to "bad"
- 212: checking whether quality 28a, 28b is "bad"
- 213: checking whether few enough invalid telegrams received
- 214: checking whether enough valid telegrams received
- 215: transitioning from "bad" to "low"
- A, B, M: redundant connections to bus line 100

## Claims

1. A voter (2) for connecting a bus device (1, 101-107) to a bus line (100) comprising at least redundant connections A and B, said voter (2) being configured to:
- receive nominally identical telegrams (29a, 29b) at the same time on both connection A and connection B, and
- forward either the telegram (29a) from connection A or the telegram (29b) from connection B on to a processing stack (3) of the bus device (1, 101-107),
- wherein a telegram (29a, 29b) is not forwarded if it is marked as defect and wherein the voter (2) is configured to:
- check whether the first byte of each telegram (29a, 29b) has a valid start bit, a valid stop bit and a valid parity bit, and
- mark a telegram (29a, 29b) as defect if its first byte does not have all of: a valid start bit, a valid stop bit and a valid parity bit,
**characterized in that** the voter (2) is further configured to:
- observe the line quality (28a, 28b) of both connection A and connection B by counting the number of telegrams (29a, 29b) marked as defect, and/or the number of telegrams (29a, 29b) not marked as defect, and if neither the telegram (29a) from connection A nor the telegram (29b) from connection B is marked as defect, forward the telegram (29a, 29b) from the connection with the better line quality (28a, 28b) to the processing stack (3) of the bus device (1, 101-107).

2. The voter (2) according to claim 1, further configured to assign one of a set of discrete line quality (28a, 28b) levels to each of connections A and B, where each quality level is associated with a threshold value for the number of telegrams (29a, 29b) marked as defect, and/or the number of telegrams (29a, 29b) not marked as defect.

3. The voter (2) according to any one of claims 1 or 2, further configured to observe the line quality (28a, 28b) over a fixed time interval extending from the present into the past, and/or on the basis of the most recent N received telegrams (29a, 29b), where N is a positive integer.

4. The voter (2) according to claim 3, further comprising at least one shift register (21a, 21b) to store decisions (26a, 26b) whether a telegram (29a, 29b) has been marked as defect and/or other observations indicative of line quality (28a, 28b).

5. The voter (2) according to any one of claims 1 to 4, further configured to: if both the telegram (29a) received from connection A and the telegram (29b) received from connection B are not marked as defect and line qualities (28a, 28b) of connections A and B are equal, alternate between forwarding a telegram (29a) received from connection A and forwarding a telegram (29b) received from connection B to the processing stack (3) of the bus device (1, 101-107).

6. The voter (2) according to any one of claims 1 to 5, further comprising a measuring module (22a, 22b) that is configured to measure, on each of the connections A and B, at least one physical quantity (27a, 27b), and further configured to observe the line quality (28a, 28b) of connections A and B based at least in part on the measurement results (27a, 27b) acquired by said measuring module (22a, 22b).

7. The voter (2) according to claim 6, wherein the observation of line quality (28a, 28b) is based at least in part on a comparison of the measurement results (27a, 27b) with a physical specification of the bus line (100).

8. The voter (2) according to claim 6 or 7, wherein the measurement module (22a, 22b) is configured to measure one or more of: a voltage, an impedance, a pulse shape of pulses that represent transmitted bits, or a timing of pulses that represent transmitted bits.

9. A non-transitory storage medium comprising machine readable instructions that, when executed by a computer, a voter or a bus device, augment the computer, the voter or the bus device with the functionality of the voter according to any one of claims 1 to 8.

## Patentansprüche

1. Auswahlvorrichtung (2) zum Verbinden einer Busvorrichtung (1, 101-107) mit einer Busleitung (100), die mindestens redundante Verbindungen A und B umfasst, wobei die Auswahlvorrichtung (2) für folgende Vorgänge ausgelegt ist:
Empfangen von nominell identischen Telegrammen (29a, 29b) gleichzeitig sowohl auf Verbindung A als auch Verbindung B, und
Weiterleiten entweder des Telegramms (29a) von Verbindung A oder des Telegramms (29b) von Verbindung B an einen Verarbeitungsstapel (3) der Busvorrichtung (1, 101-107),
wobei ein Telegramm (29a, 29b) nicht weitergeleitet wird,
wenn es als fehlerhaft gekennzeichnet ist, und wobei die Auswahlvorrichtung (2) für folgende Vorgänge ausgelegt ist:
Überprüfen, ob das erste Byte jedes Telegramms (29a, 29b) ein gültiges Startbit, ein gültiges Stoppbit und ein gültiges Paritätsbit aufweist, und
Kennzeichnen eines Telegramms (29a, 29b) als fehlerhaft, wenn sein erstes Byte nicht alle der folgenden Merkmale aufweist: ein gültiges Startbit, ein gültiges Stoppbit und ein gültiges Paritätsbit,
**dadurch gekennzeichnet, dass** die Auswahlvorrichtung (2) ferner für folgende Vorgänge ausgelegt ist:
Beobachten der Leitungsqualität (28a, 28b) sowohl von Verbindung A als auch von Verbindung B durch Zählen der Anzahl von als fehlerhaft gekennzeichneten Telegrammen (29a, 29b) und/oder der Anzahl von nicht als fehlerhaft gekennzeichneten Telegrammen (29a, 29b), und wenn weder das Telegramm (29a) von Verbindung A noch das Telegramm (29b) von Verbindung B als fehlerhaft gekennzeichnet ist, Weiterleiten des Telegramms (29a, 29b) von der Verbindung mit der besseren Leitungsqualität (28a, 28b) an den Verarbeitungsstapel (3) der Busvorrichtung (1, 101-107).

2. Auswahlvorrichtung (2) nach Anspruch 1, ferner dafür ausgelegt, jeder der Verbindungen A und B eine aus einem Satz diskreter Leitungsqualitätsstufen (28a, 28b) zuzuweisen, wobei jede Qualitätsstufe einem Schwellenwert für die Anzahl von als fehlerhaft gekennzeichneten Telegrammen (29a, 29b) und/oder die Anzahl von nicht als fehlerhaft gekennzeichneten Telegrammen (29a, 29b) zugeordnet ist.

3. Auswahlvorrichtung (2) nach einem der Ansprüche 1 oder 2, ferner dafür ausgelegt, die Leitungsqualität (28a, 28b) über ein festes Zeitintervall, das sich von der Gegenwart in die Vergangenheit erstreckt, und/oder auf der Grundlage der letzten N empfangenen Telegramme (29a, 29b) zu beobachten, wobei N eine positive ganze Zahl ist.

4. Auswahlvorrichtung (2) nach Anspruch 3, ferner umfassend mindestens ein Schieberegister (21a, 21b) zum Speichern von Entscheidungen (26a, 26b), ob ein Telegramm (29a, 29b) als fehlerhaft gekennzeichnet wurde und/oder von anderen Beobachtungen, die die Leitungsqualität (28a, 28b) angeben.

5. Auswahlvorrichtung (2) nach einem der Ansprüche 1 bis 4, ferner für folgende Vorgänge ausgelegt: wenn sowohl das von Verbindung A empfangene Telegramm (29a) als auch das von Verbindung B empfangene Telegramm (29b) nicht als fehlerhaft gekennzeichnet sind und die Leitungsqualitäten (28a, 28b) der Verbindungen A und B gleich sind, Abwechseln zwischen dem Weiterleiten eines von Verbindung A empfangenen Telegramms (29a) und dem Weiterleiten eines von Verbindung B empfangenen Telegramms (29b) an den Verarbeitungsstapel (3) der Busvorrichtung (1, 101-107).

6. Auswahlvorrichtung (2) nach einem der Ansprüche 1 bis 5, ferner umfassend ein Messmodul (22a, 22b), das dafür ausgelegt ist, an jeder der Verbindungen A und B mindestens eine physikalische Größe (27a, 27b) zu messen, und ferner dafür ausgelegt ist, die Leitungsqualität (28a, 28b) der Verbindungen A und B zumindest teilweise auf der Grundlage der vom Messmodul (22a, 22b) erfassten Messergebnisse (27a, 27b) zu beobachten.

7. Auswahlvorrichtung (2) nach Anspruch 6, wobei die Beobachtung der Leitungsqualität (28a, 28b) zumindest teilweise auf einem Vergleich der Messergebnisse (27a, 27b) mit einer physikalischen Spezifikation der Busleitung (100) basiert.

8. Auswahlvorrichtung (2) nach Anspruch 6 oder 7, wobei das Messmodul (22a, 22b) dafür ausgelegt ist, eine oder mehrere der folgenden Größen zu messen: eine Spannung, eine Impedanz, eine Impulsform von Impulsen, die übertragene Bits darstellen, oder einen Zeitverlauf von Impulsen, die übertragene Bits darstellen.

9. Nichtflüchtiges Speichermedium, umfassend maschinenlesbare Anweisungen, die bei ihrer Ausführung durch einen Computer, eine Auswahlvorrichtung oder eine Busvorrichtung den Computer, die Auswahlvorrichtung oder die Busvorrichtung mit der Funktionalität der Auswahlvorrichtung nach einem der Ansprüche 1 bis 8 erweitern.

## Revendications

1. Électeur (2) pour connecter un dispositif de bus (1, 101-107) à une ligne de bus (100) comprenant au moins des connexions redondantes A et B, ledit électeur (2) étant configuré de façon à :
- recevoir en même temps des télégrammes nominalement identiques (29a, 29b) à la fois sur la connexion A et la connexion B, et à
- réacheminer soit le télégramme (29a) venant de la connexion A, soit le télégramme (29b) venant de la connexion B sur une pile de traitement (3) du dispositif de bus (1, 101-107),
- un télégramme (29a, 29b) n'étant pas réacheminé s'il est marqué comme défectueux et l'électeur (2) étant configuré de façon à :
- vérifier si le premier octet de chaque télégramme (29a, 29b) a un bit de départ valide, un bit d'arrêt valide et un bit de parité valide, et à
- marquer un télégramme (29a, 29b) comme défectueux si son premier octet n'a pas tous les bits suivants : un bit de départ valide, un bit d'arrêt valide et un bit de parité valide, **caractérisé en ce que** l'électeur (2) est configuré en outre de façon à :
- observer la qualité de la ligne (28a, 28b) à la fois de la connexion A et de la connexion B en comptant le nombre de télégrammes (29a, 29b) marqués comme défectueux, et/ou le nombre de télégrammes (29a, 29b) pas marqués comme défectueux, et à, si ni le télégramme (29a) venant de la connexion A, ni le télégramme (29b) venant de la connexion B n'est marqué comme défectueux, réacheminer le télégramme (29a, 29b) venant de la connexion avec la meilleure qualité de ligne (28a, 28b) jusqu'à la pile de traitement (3) du dispositif de bus (1, 101-107).

2. Électeur (2) selon la revendication 1, configuré en outre de façon à attribuer un niveau parmi un ensemble de niveaux de qualité de ligne (28a, 28b) discrets à chacune des connexions A et B, chaque niveau de qualité étant associé à une valeur de seuil pour le nombre de télégrammes (29a, 29b) marqués comme défectueux et/ou le nombre de télégrammes (29a, 29b) pas marqués comme défectueux.

3. Électeur (2) selon l'une quelconque des revendications 1 ou 2, configuré en outre de façon à observer la qualité de la ligne (28a, 28b) pendant un intervalle de temps fixé s'étendant du présent dans le passé, et/ou en se basant sur les N télégrammes reçus les plus récents (29a, 29b), N étant un nombre entier positif.

4. Électeur (2) selon la revendication 3, comprenant en outre au moins un registre à décalage (21a, 21b) pour stocker des décisions (26a, 26b) de si un télégramme (29a, 29b) a été marqué ou pas comme défectueux et/ou d'autres observations indicatives de la qualité de la ligne (28a, 28b).

5. Électeur (2) selon l'une quelconque des revendications 1 à 4, configuré en outre de façon à : si le télégramme (29a) reçu de la connexion A et le télégramme (29b) reçu de la connexion B ne sont tous les deux pas marqués comme défectueux et que les qualités des lignes (28a, 28b) des connexions A et B sont égales, alterner entre le réacheminement d'un télégramme (29a) reçu de la connexion A et le réacheminement d'un télégramme (29b) reçu de la connexion B jusqu'à la pile de traitement (3) du dispositif de bus (1, 101-107).

6. Électeur (2) selon l'une quelconque des revendications 1 à 5, comprenant en outre un module de mesure (22a, 22b) qui est configuré de façon à mesurer, sur chacune des connexions A et B, au moins une quantité physique (27a, 27b), et configuré en outre de façon à observer la qualité de la ligne (28a, 28b) des connexions A et B en se basant au moins en partie sur les résultats de la mesure (27a, 27b) acquis par ledit module de mesure (22a, 22b).

7. Électeur (2) selon la revendication 6, dans lequel l'observation de la qualité de la ligne (28a, 28b) est basée au moins en partie sur une comparaison des résultats de la mesure (27a, 27b) avec une spécification physique de la ligne de bus (100).

8. Électeur (2) selon la revendication 6 ou 7, dans lequel le module de mesure (22a, 22b) est configuré de façon à mesurer un ou plusieurs des paramètres suivants : une tension, une impédance, une forme d'impulsion d'impulsions qui représentent des bits transmis, ou une synchronisation d'impulsions qui représentent des bits transmis.

9. Support de stockage non transitoire comprenant des instructions lisibles par machine qui, lorsqu'elles sont exécutées par un ordinateur, un électeur ou un dispositif de bus, augmentent l'ordinateur, l'électeur ou le dispositif de bus avec la fonctionnalité de l'électeur selon l'une quelconque des revendications 1 à 8.
